# FASCICULE DE BREVET EUROPEEN

(11) **EP 1 080 386 B1**
(45) Date de publication et mention de la délivrance du brevet: **19.12.2001**
(21) Numéro de dépôt: 99918047.4
(22) Date de dépôt: 11.05.1999
(51) Int. Cl.: G02B 6/44

(54) **CABLE COMPORTANT DES FIBRES OPTIQUES ENTOUREES PAR UNE GAINE A RENFORTS LONGITUDINAUX**
FASEROPTISCHES KABEL MIT EINER LONGITUDINAL VERSTÄRKENDEN UMHÜLLUNG
CABLE COMPRISING OPTICAL FIBRES ENCLOSED IN A SHEATH WITH LONGITUDINAL REINFORCING ELEMENTS

(30) Priorité: 18.05.1998 FR 9806230
(43) Date de publication de la demande: 07.03.2001
(73) Titulaire: SAGEM S.A., 75116 Paris (FR)
(72) Inventeur: JAMET, Patrick, F-77130 Marolles sur Seine (FR)
(74) Mandataire: Fruchard, Guy
(86) Numéro de dépôt international: FR9901118
(87) Numéro de publication internationale: WO9960435

(56) Documents cités:
- DE-A- 2 635 917
- JP-A- 58 150 907

## Description

La présente invention concerne un câble comportant des fibres optiques entourées par une gaine à renforts longitudinaux.

Dans l'industrie du câble, il est bien connu que les fibres optiques ne doivent pas subir de contraintes mécaniques si l'on veut éviter de dégrader leurs performances en transmission ou leur durée de vie.

On dispose donc les fibres optiques dans une gaine qui assure leur protection mécanique contre la traction, la compression longitudinale ou les efforts d'écrasement.

En outre, pour limiter les contraintes sur les fibres optiques lors de la pose des câbles ou lors de variations de température qui entraînent une dilatation et une rétraction des matières constituant la gaine, il est connu d'utiliser des organes de renfort s'étendant dans une couche de la gaine du câble.

On a constaté que la résistance à l'écrasement résulte principalement de l'épaisseur de la matière formant la gaine. Un effort d'écrasement du câble appliqué sur la gaine au droit des organes de renfort est insuffisamment absorbé par la gaine et est donc transmis aux organes de renfort qui risquent, sous cet effort, de provoquer une déchirure de la gaine. Il en résulte un risque de détérioration des fibres optiques.

On a proposé dans le document FR-A- 2.745.642 un câble à fibres optiques dont la gaine comporte quatre nervures diamétralement opposées s'étendant en saillie le long du câble. Un tel câble présente une bonne résistance à l'écrasement. Toutefois, il pose des problèmes d'étanchéité tant au niveau de la connexion avec un boîtier de raccordement que lors de la pose dans une conduite en utilisant un flux d'air comprimé. En outre, en raison de sa structure, un tel câble est difficile à enrouler de façon régulière sur une bobine et coulisse avec un frottement important dans une conduite cylindrique.

On connaît du document DE-A-26 35 917 un câble qui comporte des fibres optiques entourées par une gaine ayant en coupe transversale un contour externe ovale présentant un petit axe. La gaine comprend une couche dans laquelle s'étendent des organes de renforts allongés disposés de part et d'autre du petit axe. Ce câble présente alors une résistance à l'écrasement plus forte selon la direction du petit axe et, lorsque le câble repose sur un support, l'ovalisation du contour externe provoque une orientation naturelle du câble de sorte que le petit axe s'étend perpendiculairement à ce support, c'est-à-dire selon la direction privilégiée des efforts d'écrasement. Cependant, ce câble a une forte ovalisation qui rend difficile la réalisation d'une étanchéité au niveau des boîtiers de raccordement. La forme ovale permet en outre un enroulement régulier sur une bobine et un coulissement dans une conduite cylindrique avec un faible frottement.

Un but de l'invention est de proposer un câble à fibres optiques qui possède une forte résistance à l'écrasement sans pour autant que les propriétés de flexion ou de montage étanche de l'extrémité du câble en soient affectées.

En vue de la réalisation de ce but, on prévoit selon l'invention, un câble comportant des fibres optiques entourées par une gaine ayant en coupe transversale un contour externe sensiblement ovale présentant un petit axe, la gaine comprenant au moins une couche dans laquelle s'étendent au moins deux organes de renfort allongés disposés symétriquement de part et d'autre du petit axe, le contour externe ayant une ovalisation, c'est-à-dire un rapport de deux fois la différence entre la plus grande dimension et la plus petite dimension du contour externe sur la somme de ces dimensions, comprise entre 1% et 10%.

Ainsi, l'ovalisation est suffisante pour que le câble se positionne naturellement selon la direction de plus grande résistance à l'écrasement lorsqu'il repose sur un support. En outre, dans cette position la flexibilité relative du câble selon les différentes directions est telle que l'on minimise le risque d'ondulation du câble lorsque celui-ci est mis en place dans une conduite en le poussant. Par ailleurs, les extrémités de câble sont généralement montées dans des embouts cylindriques avec un jeu tel que l'ovalisation précitée du contour externe du câble n'affecte pas la possibilité de réaliser une étanchéité de l'entrée des boîtiers de raccordement ou d'épissurage.

D'autres caractéristiques et avantages de l'invention ressortiront à la lecture de la description qui suit d'un mode de réalisation particulier non limitatif de l'invention.

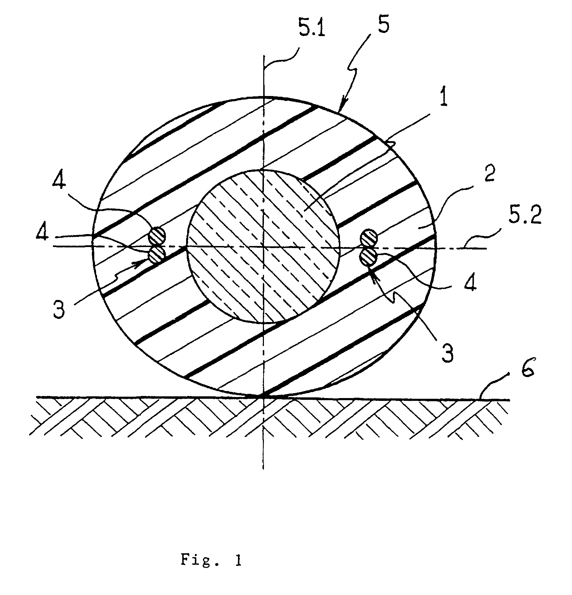

Il sera fait référence à la figure unique jointe représentant une vue en coupe transversale du câble selon l'invention.

En référence à la figure, le câble selon l'invention comporte un faisceau de fibres optiques 1 dont la structure n'a pas été détaillée mais qui peut, par exemple, être réalisé sous forme d'un ou plusieurs groupes de fibres optiques maintenues accolées les unes aux autres par des gaines de maintien, comme décrit dans le document FR-A-2.665.266.

Le faisceau de fibres optiques est entouré par une gaine externe 2, ici réalisée en une seule couche, dans laquelle sont noyés deux groupes 3 constitués chacun de deux organes de renfort 4. Les organes de renfort sont réalisés dans des matériaux conventionnels tels que des fils métalliques, ou des mèches de fibres de verre ou d'aramide rigidifiées par une résine ayant un haut module de traction et un faible coefficient de dilatation thermique.

Conformément à l'invention, la gaine présente, en coupe transversale au repos telle que représentée à la figure, un contour externe 5 de forme sensiblement ovale. Le contour externe 5 illustré présente un petit axe de symétrie 5.1 (vertical sur la figure) et un grand axe de symétrie 5.2 (horizontal sur la figure) mais la forme ovale au sens de l'invention comprend tout contour de forme curviligne dont la courbure est essentiellement tournée vers l'intérieur du contour sans rebroussement et ayant des dimensions différentes selon deux directions sensiblement perpendiculaires, ces directions étant dénommées axes bien qu'il ne s'agisse pas nécessairement d'axes de symétrie. La gaine est ici réalisée par extrusion à l'aide d'une filière présentant un orifice de contour ovale, mais d'autres modes de réalisation pourraient être utilisés.

Le contour externe 5 a une ovalisation comprise entre 1% et 10%. Par ovalisation, on entendra le rapport de deux fois la différence entre la plus grande dimension et la plus petite dimension du contour externe (mesurées respectivement le long des axes 5.2 et 5.1) sur la somme de la plus grande dimension et de la plus petite dimension du contour externe.

Les groupes 3 d'organes de renfort 4 s'étendent symétriquement de part et d'autre du petit axe de symétrie 5.1.

On comprend que lorsque le câble selon l'invention est déposé sur un support 6 il s'oriente naturellement de par son contour externe 5 ovale de telle sorte que le petit axe de symétrie 5.1 s'étende de façon sensiblement perpendiculaire au support 6. Ainsi, si un opérateur marche sur le câble, l'effort d'écrasement sera appliqué selon la direction de l'axe de symétrie 5.1, direction dans laquelle le câble offre la meilleure résistance à l'écrasement. En outre, cette orientation spontanée du câble présente l'avantage de faciliter le repérage des organes de renfort dans la gaine, de sorte qu'il est facile d'inciser la gaine sans endommager les organes de renfort pour accéder aux fibres optiques.

On notera que les valeurs d'ovalisation retenues sont suffisantes pour privilégier une orientation du câble sur le support, tout en permettant de réaliser facilement l'étanchéification des boîtiers de connexion auxquels est raccordé le câble.

Bien entendu l'invention n'est pas limitée au mode de réalisation décrit et on peut y apporter des variantes de réalisation sans sortir du cadre de l'invention tel que défini par les revendications.

En particulier, bien que la gaine externe ait été représentée à la figure ayant, en coupe transversale, un contour interne circulaire, elle pourrait avoir un contour interne de forme ovale. En outre, la gaine pourrait être une gaine multicouche.

Bien que les organes de renfort aient été décrits comme formés de deux groupes de deux organes de renfort, on pourrait réaliser un câble comprenant seulement deux organes de renfort disposés symétriquement par rapport au petit axe de symétrie, ou deux groupes comportant plus de deux organes de renfort.

## Revendications

1. Câble comportant des fibres optiques (1) entourées par une gaine (2) ayant en coupe transversale un contour externe (5) sensiblement ovale présentant un petit axe (5.1), la gaine comprenant au moins une couche dans laquelle s'étendent au moins deux organes de renfort (4) allongés disposés symétriquement de part et d'autre du petit axe, **caractérisé en ce que** le contour externe (5) a une ovalisation, c'est-à-dire un rapport de deux fois la différence entre la plus grande dimension et la plus petite dimension du contour externe sur la somme de ces dimensions, comprise entre 1% et 10%.

## Patentansprüche

1. Kabel umfassend optische Fasern (1) umgeben von einer Umhüllung (2), welche im Querschnitt eine im wesentlichen ovale äußere Kontur (5) mit einer kleinen Achse (5.1) hat, wobei die Umhüllung zumindest eine Schicht hat, in der sich zumindest zwei längliche Verstärkungselemente (4) erstrekken, die symmetrisch auf beiden Seiten der kleinen Achse angeordnet sind, **dadurch gekennzeichnet, daß** die Ovalität der äußeren Kontur (5), d.h. das Verhältnis der doppelten Differenz zwischen dem größten Maß und dem kleinsten Maß der äußeren Kontur zur Summe dieser beiden Maße zwischen 1% und 10% beträgt.

## Claims

1. A cable including optical fibers (1) surrounded by a sheath (2) whose cross-section has a substantially oval outline (5) presenting a minor axis (5.1), the sheath comprising at least one layer in which at least two elongate reinforcement members (4) extend symmetrically on either side of the minor axis, the cable being **characterized in that** the outline (3) has an ovalization (5), that is a ratio of twice the difference between the largest dimension and the smallest dimension of the outline over the sum of those dimensions, which lies in the range 1% to 10%.
